# EUROPÄISCHE PATENTSCHRIFT

(11) **EP 4 077 889 B1**
(45) Veröffentlichungstag und Bekanntmachung des Hinweises auf die Patenterteilung: **31.01.2024**
(21) Anmeldenummer: 20820868.6
(22) Anmeldetag: 07.12.2020
(51) Int. Cl.: F01K 23/06

(54) **VORRICHTUNG ZUR ENERGIERÜCKGEWINNUNG**
ENERGY RECOVERY DEVICE
DISPOSITIF DE RÉCUPÉRATION D'ÉNERGIE

(30) Priorität: 21.12.2019 DE 102019009037
(43) Veröffentlichungstag der Anmeldung: 26.10.2022
(73) Patentinhaber: MAN Truck & Bus SE, 80995 München (DE)
(72) Erfinder: SCHYDLO, Alexander, 80995 München (DE)
(74) Vertreter: v. Bezold & Partner Patentanwälte - PartG mbB
(86) Internationale Anmeldenummer: PCT/EP2020/084813
(87) Internationale Veröffentlichungsnummer: WO 2021/122083

(56) Entgegenhaltungen:
- EP-A1- 2 436 976
- DE-A1-102015 214 727
- US-A1- 2017 130 633
- US-A1- 2017 145 850
- US-A1- 2018 257 479

## Beschreibung

Die Erfindung betrifft eine Vorrichtung zur Energierückgewinnung mit einer Antriebseinheit und einem Fluidkreislauf zur Abwärmenutzung der Antriebseinheit.

In Kraftfahrzeugen, insbesondere Nutzfahrzeugen, mit Brennstoffzellenantrieb entsteht im Energieerzeugungsprozess des Brennstoffzellenantriebs ein Abwärmestrom. Dieser Abwärmestrom kann deutlich höher sein als in konventionellen Antrieben. Da in Brennstoffzellenantrieben der Abgasenthalpiestrom annähernd vernachlässigbar ist und der Wirkungsgrad der Brennstoffzelle z. B. durchschnittlich 50% beträgt, lässt sich feststellen, dass der Abwärmestrom, der im Kühlsystem übertragen wird, fast der erzeugten elektrischen Leistung entspricht.

Die US 10,252,610 B2 offenbart ein Elektrofahrzeug mit einer Brennstoffzelle und einem Rankine-Kreisprozess zur Energierückgewinnung aus Abwärme der Brennstoffzelle. Das System weist eine Expansionsmaschine und einen Expansionsmaschinen-Bypass auf. Der Expansionsmaschinen-Bypass wird durchströmt, wenn das Fahrzeug nicht läuft oder keine Elektrizität erzeugt werden muss.

Die DE 10 2007 061 032 A1 offenbart einen Kühlkreislauf für eine Verbrennungskraftmaschine. Zusätzlich zu dem Kühlkreislauf ist ein Arbeitskreislauf zur Energierückgewinnung vorgesehen. Der Arbeitskreislauf weist eine Expansionsmaschine und einen Expansionsmaschinen-Bypass auf. Unmittelbar nach dem Start der Brennkraftmaschine, wenn das Arbeitsmedium des Arbeitskreislaufs sich noch im flüssigen Zustand befindet, wird der Expansionsmaschinen-Bypass durchströmt.

Die US 2018/257479 A1 offenbart ein Elektrofahrzeug umfassend einen oder mehrere radintegrierte Motoren, eine Batterie, die elektrisch mit einem oder mehreren radintegrierten Motoren verbunden ist, eine Leistungselektronik mit einem Gleichstrom-Wechselstrom-Wechselrichter, einem Wechselstrom-Gleichstrom-Wechselrichter und einem Hochsetzsteller, der Gleichstrom von der Batterie erhält und Wechselstrom an den einen oder die mehreren radintegrierten Motoren liefert, sowie einen Generator, der über die Leistungselektronik elektrisch mit der Batterie verbunden ist. Ferner umfasst das Elektrofahrzeug ein Rankine-Kreislaufsystem mit einer Pumpe, einem ersten Ventil mit einem Eingang, einem ersten Ausgang und einem zweiten Ausgang, die mit der Pumpe, dem Generator bzw. dem einen oder den mehreren In-Rad-Motoren verbunden sind. Ein zweites Ventil mit einem ersten Eingang ist mit dem Generator verbunden, ein zweiter Eingang mit dem einen oder den mehreren Radnabenmotoren und ein Ausgang liefert das Arbeitsmittel an die Leistungselektronik. Ein Expander empfängt das Arbeitsmedium von mindestens einer der Leistungselektroniken.

Die EP 2 436 976 A1 offenbart ein Rankine-Zyklus-System, das an einem Fahrzeug montiert ist. Das Rankine-Zyklus-System umfasst einen Rankine-Zyklus-Kreislauf, einen Druckdetektor, einen Temperaturdetektor und eine Steuereinheit. Der Rankine-Kreislauf umfasst eine Flüssigkeitsexpansionsvorrichtung, eine Flüssigkeitsübertragungsvorrichtung, einen ersten und einen zweiten Kanal, eine Heizung, eine Kühlvorrichtung, einen Bypasskanal und ein Durchflussregelventil. Der Bypasskanal verbindet den ersten Kanal und den zweiten Kanal, und das Durchflussregelventil ist zum Öffnen und Schließen des Bypasskanals vorgesehen. Die Steuereinheit ist mit dem Durchflussregelventil verbunden, um den Betrieb des Durchflussregelventils zu steuern, sowie mit den Druck- und Temperaturdetektoren und um Druck- und Temperatursignale von den Druck- bzw. Temperaturdetektoren zu empfangen. Die Steuereinheit steuert den Betrieb des Durchflussregelventils auf der Grundlage eines Überhitzungsgrads des Arbeitsfluids, der aus den Druck- und Temperatursignalen berechnet wird.

Die US 2017/145850 A1 offenbart ein Abwärmerückgewinnungssystem, das in Verbindung mit einem Energiequellensystem verwendet wird. Eine Pumpe kann ein Arbeitsmedium bis zu einem bestimmten Druckschwellenwert unter Druck setzen und das Arbeitsmedium durch einen Flüssigkeitsstrompfad leiten. Ein Verdampfer und ein Kondensator können jeweils an den Fluidströmungsweg angeschlossen sein. An den Verdampfer und den Kondensator kann jeweils eine Turbine angeschlossen sein, die das Arbeitsmedium aufnehmen kann, wenn das Arbeitsmedium über dem eingestellten Druckschwellenwert und einem vorbestimmten thermischen Schwellenwert liegt. An die Turbine kann eine elektrische Maschine angeschlossen werden, die als Motor oder als Generator arbeiten kann. Am anderen Ende der Turbine kann eine Wellenkupplung angebracht sein, die auch mit der Pumpe verbunden ist. Die Pumpe kann von der elektrischen Maschine, die im Motorbetrieb arbeitet, über die Wellenkupplung angetrieben werden, um das Abwärmerückgewinnungssystem mit Druck zu versorgen.

Die DE 10 2015 214 727 A1 offenbart eine Abwärmenutzungsanordnung einer Brennkraftmaschine, umfassend einen ein Arbeitsmedium führenden Arbeitskreislauf. In dem Arbeitskreislauf sind in Flussrichtung des Arbeitsmediums eine Speisepumpe, ein Verdampfer, eine Expansionsmaschine und ein Kondensator angeordnet. Der Verdampfer ist auch in einem Abgastrakt der Brennkraftmaschine angeordnet. Zu dem Arbeitskreislauf ist zwischen dem Verdampfer und dem Kondensator eine Nebenleitung parallel geschaltet. In der Nebenleitung ist ein Teilstromverdampfer angeordnet, wobei in der Nebenleitung weiterhin ein Drucksensor und/oder ein Temperatursensor angeordnet sind, wobei der Drucksensor und/oder der Temperatursensor stromabwärts des Teilstromverdampfers angeordnet ist.

Die US 2017/0130633 A1 offenbart eine Abgasanlage umfassend ein Abgassystem zur Förderung eines Abgasstroms. Das Abgassystem umfasst eine Turbine und ein Abgasbehandlungssystem. Die Abgasanlage umfasst ferner einen mit dem Abgassystem verbundenen Arbeitsmittelkreislauf zur Rückgewinnung von Energie aus dem Abgasstrom. Der Arbeitsmittelkreislauf umfasst einen ersten Wärmetauscher, der an einer Abwärmequelle zum Wärmeaustausch zwischen der Abwärmequelle und einem Arbeitsmittel im Arbeitsmittelkreislauf angeordnet ist, und einen zweiten Wärmetauscher, der im Abgassystem zum Wärmeaustausch zwischen dem Abgas und dem Arbeitsmittel angeordnet ist. Der zweite Wärmetauscher ist stromabwärts von der Turbine und stromaufwärts von einem Partikelfilter im Abgasbehandlungssystem angeordnet.

Der Erfindung liegt die Aufgabe zu Grunde, eine alternative und/oder verbesserte Technik zur Energierückgewinnung aus Abwärme einer Antriebseinheit, vorzugsweise eines Brennstoffzellen-Antriebs, zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Gemäß einem Aspekt ist eine Vorrichtung zur Energierückgewinnung z. B. für ein Kraftfahrzeug offenbart. Die Vorrichtung weist einen Antrieb (z. B. Elektroantrieb), vorzugsweise einen Brennstoffzellen-Antrieb, auf. Die Vorrichtung weist einen Fluidkreislauf zur Abwärmenutzung des Antriebs auf. In dem Fluidkreislauf zirkuliert ein Arbeitsfluid (z. B. Kühlfluid). Der Fluidkreislauf weist einen ersten Wärmeübertrager auf, der thermisch mit dem Antrieb zur Übertragung von Abwärme von dem Antrieb (z. B. eines Brennstoffzellen-Stacks des Antriebs) auf das Arbeitsfluid gekoppelt ist. Der Fluidkreislauf weist eine Expansionsmaschine (z. B. Turbinen-Expander, Scroll-Expander oder Kolben-Expander) auf, die stromabwärts des ersten Wärmeübertragers angeordnet ist (z. B. zum Antreiben eines Elektrogenerators usw.). Der Fluidkreislauf weist einen Expansionsmaschinen-Bypass auf, der die Expansionsmaschine umgeht und in dem ein zweiter Wärmeübertrager (z. B. Flüssigkeitswärmeübertrager) angeordnet ist.

Vorteilhaft bietet die Vorrichtung die Möglichkeit, Abwärme des Antriebs, vorzugsweise einer Brennstoffzelle des Antriebs, zurückzugewinnen, und zwar unabhängig davon, ob viel oder wenig Abwärme anfällt. Mittels der Expansionsmaschine kann bspw. Energie zurückgewonnen werden, wenn die Abwärme des Antriebs so groß ist, dass das Arbeitsfluid im ersten Wärmeübertrager verdampfen kann. Mittels des zweiten Wärmeübertragers kann bspw. Energie zurückgewonnen werden, wenn die Abwärme des Antriebs nicht ausreicht, um das Arbeitsfluid in dem ersten Wärmeübertrager zu verdampfen, z. B. bei Teillast oder beim Starten des Antriebs. Die Vorrichtung ermöglicht somit auch einen Schutz der Expansionsmaschine vor (zu viel) flüssigem Arbeitsfluid, wobei selbst aus dem flüssigen, erwärmten Arbeitsfluid noch eine Energierückgewinnung mittels des zweiten Wärmeübertragers möglich ist. Zusätzlich kann so der Gesamtwirkungsgrad gesteigert werden. Außerdem kann die elektrische effektive Leistung einer ggf. verwendeten Brennstoffzelle durch die effektive Kühlung gesteigert werden. Die effektive Kühlung des Antriebs mittels des ersten Wärmeübertragers mit und ohne Phasenumwandlung kann zudem eine Reduzierung der notwendigen wärmeübertragenden Kühlerfläche des Antriebs ermöglichen.

Vorzugsweise kann der Fluidkreislauf ferner einen dritten Wärmeübertrager (z. B. Kühler oder Kondensator, z. B. lüftergekühlt) aufweisen, der bspw. stromabwärts von dem Expansionsmaschinenbypass und der Expansionsmaschine angeordnet sein kann.

Bevorzugt kann der Fluidkreislauf eine Pumpe aufweisen, die bspw. stromaufwärts von dem ersten Wärmeübertrager angeordnet sein kann.

In einem Ausführungsbeispiel ist der zweite Wärmeübertrager thermisch mit einem System zur Übertragung von Wärme von dem Arbeitsfluid auf das System gekoppelt (z. B. direkt oder indirekt). Somit kann die zurückgewonnene Energie von dem System systemspezifisch genutzt werden.

In einer Weiterbildung weist das System eine Heizung, eine Klimaanlage, eine Batterietemperierung, eine Wärmepumpe, einen Wärmespeicher und/oder eine Abwärmenutzungseinrichtung (z. B. zur Umwandlung von thermischer Energie in mechanische Energie) auf.

In einem weiteren Ausführungsbeispiel ist der Fluidkreislauf in Abhängigkeit von der Abwärme des Antriebs in einem Energierückgewinnungsmodus mit einer Phasenumwandlung (z. B. Verdampfung) des Arbeitsfluids im ersten Wärmeübertrager betreibbar, wobei das Arbeitsfluid nach der Phasenumwandlung im Wesentlichen nur zu der Expansionsmaschine zugeführt wird.

In einem weiteren Ausführungsbeispiel ist der Fluidkreislauf in Abhängigkeit von der Abwärme des Antriebs in einem Energierückgewinnungsmodus mit einer Erwärmung ohne eine Phasenumwandlung des Arbeitsfluids im ersten Wärmeübertrager betreibbar, wobei das Arbeitsfluid nach der Erwärmung ohne die Phasenumwandlung im Wesentlichen nur dem zweiten Wärmeübertrager im Expansionsmaschinen-Bypass zugeführt wird.

In einem weiteren Ausführungsbeispiel ist der Fluidkreislauf in Abhängigkeit von der Abwärme des Antriebs in einem Energierückgewinnungsmodus mit einer teilweisen Phasenumwandlung des Arbeitsfluids im ersten Wärmeübertrager betreibbar. Beispielsweise kann das Arbeitsfluid nach der teilweisen Phasenumwandlung teilweise (z. B. der dampfförmige Anteil) der Expansionsmaschine und teilweise (z. B. der flüssige Anteil) dem zweiten Wärmeübertrager im Expansionsmaschinen-Bypass zugeführt werden. Alternativ kann das Arbeitsfluid nach der teilweisen Phasenumwandlung (z. B. in Form von Nassdampf) im Wesentlichen nur der Expansionsmaschine zugeführt werden.

Erfindungsgemäß weist der Fluidkreislauf eine Ventileinrichtung auf, die zum Anpassen eines Fluidstroms des Arbeitsfluids durch die Expansionsmaschine und/oder den Expansionsmaschinen-Bypass angeordnet ist.

In einer Weiterbildung ist die Ventileinrichtung in eine (z. B. erste) Stellung verstellbar, in der der Fluidstrom im Wesentlichen nur durch den Expansionsmaschinen-Bypass geführt ist. Alternativ oder zusätzlich ist die Ventileinrichtung in eine (z. B. zweite) Stellung verstellbar, in der der Fluidstrom im Wesentlichen nur durch die Expansionsmaschine geführt ist. Alternativ oder zusätzlich ist die Ventileinrichtung in eine (z. B. dritte) Stellung verstellbar, in der der Fluidstrom (z. B. anteilig) durch die Expansionsmaschine und (z. B. anteilig) durch den Expansionsmaschinen-Bypass geführt ist.

In einer weiteren Ausführungsform ist die Ventileinrichtung stufenlos oder schrittweise verstellbar, z. B. zwischen der ersten Stellung, der zweiten Stellung und der dritten Stellung.

Erfindungsgemäß weist die Vorrichtung eine Steuereinheit auf, die dazu ausgebildet ist, die Ventileinrichtung zu verstellen (z. B. in die erste Stellung, zweite Stellung und/oder dritte Stellung).

Vorzugsweise kann sich der Begriff "Steuereinheit" auf eine Elektronik (z. B. mit Mikroprozessor(en) und Datenspeicher) und/oder mechanische Steuerung beziehen, die je nach Ausbildung Steuerungsaufgaben und/oder Regelungsaufgaben übernehmen kann. Auch wenn hierin der Begriff "Steuern" verwendet wird, kann damit gleichsam zweckmäßig auch "Regeln" bzw. "Steuern mit Rückkopplung" umfasst sein.

Erfindungsgemäß ist die Steuereinheit dazu ausgebildet, die Ventileinrichtung in Abhängigkeit (z. B. direkt oder indirekt) von einer Phase, einem Dampfgehalt und/oder einer Dampfmenge des Arbeitsfluids zu verstellen.

In einer weiteren Ausführungsvariante ist die Steuereinheit dazu ausgebildet, die Ventileinrichtung aus der ersten Stellung in die zweite Stellung oder die dritte Stellung zu verstellen, wenn der Dampfgehalt und/oder die Dampfmenge des Arbeitsfluids einen vorbestimmen (z. B. erstem) Grenzwert (z. B. erster Dampfgehalt-Grenzwert und/oder erster Dampfmenge-Grenzwert) überschreitet. Alternativ oder zusätzlich ist die Steuereinheit dazu ausgebildet, die Ventileinrichtung aus der dritten Stellung in die zweite Stellung zu verstellen, wenn ein Dampfgehalt und/oder eine Dampfmenge des Arbeitsfluids einen vorbestimmten (z. B. zweiten) Grenzwert (z. B. zweiter Dampfgehalt-Grenzwert und/oder zweiter Dampfmenge-Grenzwert) überschreitet. Alternativ oder zusätzlich ist die Steuereinheit dazu ausgebildet, die Ventileinrichtung aus der zweiten Stellung in die erste Stellung oder die dritte Stellung zu verstellen, wenn der Dampfgehalt und/oder die Dampfmenge des Arbeitsfluids einen vorbestimmen (z. B. dritten) Grenzwert (z. B. dritter Dampfgehalt-Grenzwert und/oder dritter Dampfmenge-Grenzwert) unterschreitet. Alternativ oder zusätzlich ist die Steuereinheit dazu ausgebildet, die Ventileinrichtung aus der dritten Stellung in die erste Stellung zu verstellen, wenn ein Dampfgehalt und/oder eine Dampfmenge des Arbeitsfluids einen vorbestimmten (z. B. vierten) Grenzwert (z. B. vierter Dampfgehalt-Grenzwert und/oder vierter Dampfmenge-Grenzwert) unterschreitet.

In einem Ausführungsbeispiel ist die Steuereinheit dazu ausgebildet, eine Phase, einen Dampfgehalt und/oder eine Dampfmenge des Arbeitsfluids basierend auf einem Signal von einem Temperatursensor, der z. B. stromabwärts des ersten Wärmeübertragers angeordnet ist, einem Signal von einem Drucksensor, der z. B. stromabwärts des ersten Wärmeübertragers angeordnet ist, und/oder einer Pumpendrehzahl einer Pumpe, die z. B. stromaufwärts des ersten Wärmeübertragers angeordnet ist, zu ermitteln.

In einem weiteren Ausführungsbeispiel ist die Steuereinheit dazu ausgebildet, die Ventileinrichtung in Abhängigkeit von einer Last des Antriebs zu verstellen. Vorzugsweise kann die Ventileinrichtung bei einer Teillast des Antriebs zu der ersten Stellung oder der dritten Stellung verstellt werden. Alternativ oder zusätzlich kann die Ventileinrichtung bei einer Volllast des Antriebs zu der zweiten Stellung oder der dritten Stellung verstellt werden. Diese lastabhängige Steuerung kann verhältnismäßig einfach realisierbar sein.

In einer Ausführungsform weist der Fluidkreislauf ferner eine Drossel auf, die vorzugsweise in dem Expansionsmaschinen-Bypass und/oder stromabwärts von dem zweiten Wärmeübertrager angeordnet ist. Alternativ kann die Drossel bspw. in einem weiteren Expansionsmaschinen-Bypass, der die Expansionsmaschine umgeht (z. B. parallel zum Expansionsmaschinen-bypass), angeordnet sein. In diesem Fall kann bspw. die Ventileinrichtung zusätzlich zum Anpassen eines Fluidstroms des Arbeitsfluids durch den weiteren Expansionsmaschinen-Bypass angeordnet sein. Alternativ oder zusätzlich weist der Fluidkreislauf einen weiteren Expansionsmaschinen-Bypass auf, der die Expansionsmaschine umgeht. Beispielsweise kann der weitere Expansionsmaschinen-Bypass mit Arbeitsfluid durchströmt werden, wenn nur eine Kühlung des Antriebs gewünscht ist. Vorzugsweise ist die Ventileinrichtung in eine vierte Stellung verstellbar, in der das Arbeitsfluid im Wesentlichen nur durch den weiteren Expansionsmaschinen-Bypass geführt ist.

In einer weiteren Ausführungsform weist der Fluidkreislauf ferner einen Flüssig-Dampf-Separator (z. B. einen Kondensatableiter) auf, der vorzugsweise an einer Abzweigstelle des Expansionsmaschinen-Bypasses und/oder stromaufwärts der Expansionsmaschine angeordnet ist. Beispielsweise kann der Flüssig-Dampf-Separator einen flüssigen Anteil des Arbeitsfluids zu dem Expansionsmaschinen-Bypass leiten. Beispielsweise kann der Flüssig-Dampf-Separator einen dampfförmigen Anteil des Arbeitsfluids (z. B. Nassdampf oder überhitzter Dampf) zu der Expansionsmaschine leiten.

Es ist auch möglich, dass der Expansionsmaschinen-Bypass und/oder der weitere Expansionsmaschinen-Bypass als Überlastschutz für die Expansionsmaschine dient. Bspw. kann die Steuereinheit die Ventileinrichtung in die erste Stellung oder die vierte Stellung verstellen, wenn eine Temperatur und/oder ein Druck (z. B. erfasst durch mindestens einen Sensor) stromabwärts des ersten Wärmeübertragers einen vorbestimmten, entsprechenden (z. B. Temperatur- und/oder Druck-) Grenzwert überschreitet.

Gemäß einem weiteren Aspekt bezieht sich die vorliegende Offenbarung auf ein Kraftfahrzeug, vorzugsweise ein Nutzfahrzeug (z. B. Lastkraftwagen oder Omnibus), mit einer Vorrichtung wie hierin offenbart.

Es ist auch möglich, die Vorrichtung wie hierin offenbart für Personenkraftwagen, Großmotoren, geländegängige Fahrzeuge, stationäre Anlagen, auf Schiffen usw. zu verwenden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügte Zeichnung beschrieben. Es zeigt:

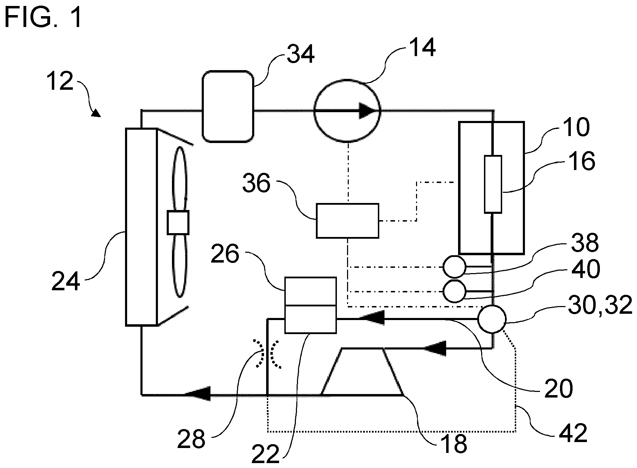

- Figur 1: eine schematische Ansicht eines Fluidkreislaufs zur Energierückgewinnung aus Abwärme eines Antriebs.

Die Figur 1 zeigt einen Antrieb 10 und einen Fluidkreislauf 12 zur Abwärmenutzung des Antriebs 10. In dem Fluidkreislauf 12 zirkuliert ein Arbeitsfluid (zum Beispiel eine organische Flüssigkeit mit einer niedrigen Verdampfungstemperatur).

Besonders bevorzugt ist der Antrieb 10 als ein Brennstoffzellen-Antrieb zum Antreiben eines Kraftfahrzeugs, vorzugsweise eines Nutzfahrzeugs, ausgeführt. Insbesondere in einer solchen Ausführung können die Vorteile des hierin offenbarten Fluidkreislaufes zur Abwärmenutzung besonders vorteilhaft genutzt werden. Wenn die Brennstoffzellen beispielsweise unter Volllast betrieben werden, kann die thermische Kapazität des Fluidkreislaufes 12 zur Kühlung der Brennstoffzellen dadurch erhöht werden, dass eine Phasenumwandlung eines Arbeitsfluids des Fluidkreislaufes 12 erfolgt. Es ist aber auch möglich, die hierin offenbarten Techniken für einen z. B. konventionellen oder anderen elektrischen Antrieb oder in Kombination damit (z. B. Hybrid-Fahrzeug) anzuwenden.

Der Fluidkreislauf 12 weist eine Pumpe 14, einen ersten Wärmeübertrager 16, eine Expansionsmaschine 18, einen Expansionsmaschinen-Bypass 20, einen zweiten Wärmeübertrager 22 und einen dritten Wärmeübertrager 24 auf.

Der erste Wärmeübertrager 16 ist stromabwärts der Pumpe 14 angeordnet. Die Expansionsmaschine 18 ist stromabwärts des ersten Wärmeübertrager 16 angeordnet. Der Expansionsmaschinen-Bypass 20 umgeht die Expansionsmaschine 18. Der Expansionsmaschinen-Bypass 20 verbindet eine Abzweigstelle stromaufwärts der Expansionsmaschine 18 mit einer Verbindungsstelle stromabwärts Expansionsmaschine 18. Der zweite Wärmeübertrager 22 ist in dem Expansionsmaschinen-Bypass 20 angeordnet. Der dritte Wärmeübertrager 24 ist stromabwärts der Expansionsmaschine 18 und des Expansionsmaschinen-Bypasses 20 angeordnet.

Die Pumpe 14 fördert das im Fluidkreislauf 12 zirkulierende Arbeitsfluid. Das Arbeitsfluid kann beispielsweise Wasser, ein Wasser-Glykol-Gemisch, ein organisches Fluid, ein anorganisches Fluid oder ein Alkohol sein oder aufweisen.

Der erste Wärmeübertrager 16 ist thermisch mit dem Antrieb 10 zur Übertragung der Abwärme des Antriebs 10 auf das Arbeitsfluid des Fluidkreislaufes 12 gekoppelt. Beispielsweise kann der erste Wärmeübertrager 16 direkt in dem Antrieb 10, vorzugsweise in einem Brennstoffzellen-Stack des Antriebs 10 zu dessen direkter Kühlung integriert sein. Es ist allerdings beispielsweise auch möglich, dass der erste Wärmeübertrager 16 neben dem Arbeitsfluid mit einem Kühlfluid eines Kühlkreislaufes des Antriebs 10, vorzugsweise des Brennstoffzellen-Stacks des Antriebs 10, durchströmt wird, um das Kühlfluid abzukühlen.

In der Expansionsmaschine 18 wird die innere Energie des verdampften Arbeitsfluids durch Entspannen des Arbeitsfluids abgebaut und dabei teilweise in mechanische Energie umgewandelt. Dadurch kann beispielsweise ein Ausgabeelement, wie eine Abtriebswelle, der Expansionsmaschine 18 angetrieben werden. Die Expansionsmaschine 18 kann beispielsweise als eine Turbine (wie in Figur 1 dargestellt), eine Kolbenmaschine oder ein Scroll-Expander ausgeführt sein.

Das Ausgabeelemente der Expansionsmaschine 18 kann beispielsweise auch mit einem Generator trieblich verbunden sein, um elektrische Energie aus der zurückgewonnene mechanischen Energie zu gewinnen. Die elektrische Energie kann beispielsweise in einer Batterie (zum Beispiel) zwischengespeichert, in ein elektrisches Bordnetz des Kraftfahrzeugs eingespeist, zu einem Elektromotor zum Antreiben des Kraftfahrzeugs oder zu einem Nebenverbraucher (z. B. den Kühlerlüfter des dritten Wärmeübertragers 24, die Pumpe 14, einen E-Booster usw.) zugeführt werden.

Der zweite Wärmeübertrager 22 ist thermisch mit einem System 26 zur Übertragung von Wärme des Arbeitsfluids auf das System 26 gekoppelt. Der zweite Wärmeübertrager 22 ist dazu ausgeführt, das Arbeitsfluid in einer flüssigen Phase zu empfangen.

Das System 26 kann eine Heizung (zum Beispiel Fahrzeugheizung), eine Klimaanlage (zum Beispiel Fahrzeug-Klimaanlage), eine Batterietemperierung (zum Beispiel Traktionsbatterie-Temperierung), eine Wärmepumpe, einen Wärmespeicher und/oder eine Abwärmenutzungseinrichtung (z. B. zur Umwandlung von thermischer Energie in mechanische Energie) aufweisen.

Es ist möglich, dass das System 26 zumindest teilweise aktivierbar und deaktivierbar ist. Wenn das System 26 deaktiviert ist, wird das flüssige Arbeitsfluid, das den zweiten Wärmeübertrager 22 durchströmt, beim Durchströmen des Wärmeübertragers 22 im Wesentlichen nicht abgekühlt. Insbesondere in einer solchen Ausführungsform kann eine Drossel 28 in den Expansionsmaschinen-Bypass 20 stromabwärts des Wärmeübertragers 22 angeordnet sein. In der Drossel 28 kann das flüssige Arbeitsfluid unter Vernichtung von Exergie gedrosselt werden, bevor es zu dem dritten Wärmeübertrager 24 gelangt.

Zum Anpassen eines Fluidstroms durch den Expansionsmaschinen-Bypass 20 und die Expansionsmaschine 18 kann eine Ventileinrichtung 30 vorgesehen sein. Die Ventileinrichtung 30 kann eines oder mehrere Ventile aufweisen. Die Ventileinrichtung 30 kann im Expansionsmaschinen-Bypass 20, an der Abzweigung des Expansionsmaschinen-Bypasses 20 von der Fluidleitung stromaufwärts der Expansionsmaschine 18 und/oder in der Fluidleitung stromaufwärts der Expansionsmaschine 18 angeordnet sein.

Es ist auch möglich, dass zusätzlich oder alternativ zu der Ventileinrichtung 30 bspw. ein Flüssig-Dampf-Separator 32 vorgesehen sein. Der Flüssig-Dampf-Separator 32 kann an der Abzweigstelle des Expansionsmaschinen-Bypasses 20 stromaufwärts der Expansionsmaschine 18 angeordnet sein. Beispielsweise kann der Flüssig-Dampf-Separator 32 mit der Ventileinrichtung 30 integriert sein. Der Flüssig-Dampf-Separator 32 kann das ankommende Arbeitsfluid in einen flüssigen Teil und einen dampfförmigen Teil aufteilen. Der flüssige Teil des Arbeitsfluids kann zu dem Expansionsmaschinen-Bypass 20 geleitet werden. Der dampfförmige Teil des Arbeitsfluids kann zu der Expansionsmaschine 18 geleitet werden.

Im dritten Wärmeübertrager 24 wird das Arbeitsfluid abgekühlt. Der dritten Wärmeübertrager 24 kann mittels eines vorzugsweise elektrisch angetriebenen Lüfters gekühlt sein. Im Ausführungsbeispiel von Figur 1 kann der dritte Wärmeübertrager 24 auch als ein Kondensator betrieben werden. Der Kondensator kondensiert das Arbeitsfluid - sofern erforderlich - vollständig, sodass die Pumpe 14 das flüssige Arbeitsfluid wieder ansaugen kann. Es ist zusätzlich möglich, dass der Fluidkreislauf 12 einen Flüssigkeitsseparator 34 stromaufwärts der Pumpe 14 aufweist.

Der Fluidkreislauf 12 ist in Abhängigkeit von der Abwärme des Antriebs 10 in unterschiedlichen Modi betreibbar.

In einem ersten Energierückgewinnungsmodus wird das Arbeitsfluid im ersten Wärmeübertrager 16 durch die Abwärme des Antriebs 10 erwärmt. Die Abwärme reicht nicht aus, um das Arbeitsfluid zu verdampfen. Das Arbeitsfluid verlässt den ersten Wärmeübertrager 16 flüssig. Das Arbeitsfluid durchströmt nach dem Erwärmen im ersten Wärmeübertrager 16 nur den Expansionsmaschinen-Bypass 20 und den zweiten Wärmeübertrager 22. Die Expansionsmaschine 18 wird nicht durchströmt. Abwärme des Antriebs 10 kann somit mittelbar mittels des zweiten Wärmeübertragers 22 im System 26 weitergenutzt werden.

Es ist möglich, dass der Fluidkreislauf 12 in einem zweiten Energierückgewinnungsmodus betreibbar ist. In dem zweiten Energierückgewinnungsmodus wird das Arbeitsfluid im ersten Wärmeübertrager 16 durch die Abwärme des Antriebs 10 erwärmt. Die Abwärme reicht aus, um das Arbeitsfluid zu verdampfen. Das Arbeitsfluid verlässt den ersten Wärmeübertrager 16 dampfförmig. Das Arbeitsfluid durchströmt nach dem Erwärmen im ersten Wärmeübertrager 16 nur die Expansionsmaschine 18. Der Expansionsmaschinen-Bypass 20 und der zweiten Wärmeübertrager 22 werden nicht durchströmt. Abwärme des Antriebs 10 kann somit mittelbar mittels der Expansionsmaschine 18 weitergenutzt werden, z. B zum Antreiben eines Generators usw. Im zweiten Energierückgewinnungsmodus kann ein Clausius-Rankine-Kreisprozess, insbesondere ein sogenannter Organic-Rankine-Kreisprozess, realisiert werden.

Es ist auch möglich, dass der Fluidkreislauf 12 in einem dritten Energierückgewinnungsmodus betreibbar ist. Im dritten Energierückgewinnungsmodus wird das Arbeitsfluid im ersten Wärmeübertrager 16 durch die Abwärme des Antriebs 10 erwärmt. Die Abwärme reicht nur aus, um das Arbeitsfluid teilweise zu verdampfen. Das Arbeitsfluid verlässt den ersten Wärmeübertrager teilweise dampfförmig. Ein flüssiger Teil des Arbeitsfluids durchströmt nach dem Erwärmen im ersten Wärmeübertrager 16 den Expansionsmaschinen-Bypass 20 und den zweiten Wärmeübertrager 22. Ein dampfförmiger Teil des Arbeitsfluids durchströmt nach dem Erwärmen im ersten Wärmeübertrager 16 die Expansionsmaschine 18. Abwärme des Antriebs 10 kann somit mittelbar mittels des zweiten Wärmeübertragers 22 und mittels der Expansionsmaschine 18 weitergenutzt werden.

Es ist auch möglich, dass der Fluidkreislauf 12 in einem reinen Kühlmodus betreibbar ist. Im Kühlmodus wird das Arbeitsfluid im ersten Wärmeübertrager 16 durch die Abwärme des Antriebs 10 erwärmt. Die Abwärme reicht nicht aus, um das Arbeitsfluid zu verdampfen. Das Arbeitsfluid verlässt den ersten Wärmeübertrager 16 flüssig. Das Arbeitsfluid durchströmt nach dem Erwärmen im ersten Wärmeübertrager 16 nur den Expansionsmaschinen-Bypass 20 und den zweiten Wärmeübertrager 22. Das System 26 ist deaktiviert. Es wird im Wesentlichen keine Wärme auf das System 26 mittels des zweiten Wärmeübertragers 22 übertragen. Das Arbeitsfluid kann in der Drossel 28, sofern vorhanden, gedrosselt werden. Das Arbeitsfluid wird im dritten Wärmeübertrager 24 gekühlt.

Die Verteilung des Arbeitsfluids zwischen dem Expansionsmaschinen-Bypass 20 und der Expansionsmaschine 18 zur Realisierung des gewünschten Modus kann selbsttätig oder zwangsgesteuert durch den Flüssig-Dampf-Separator 32, sofern vorhanden, erfolgen.

Alternativ oder zusätzlich kann die Verteilung des Arbeitsfluids zwischen dem Expansionsmaschinen-Bypass 20 und der Expansionsmaschine 18 zur Realisierung des gewünschten Modus mittels Verstellung der Ventileinrichtung 30, sofern vorhanden, erfolgen.

Die Ventileinrichtung 30 kann bspw. in eine erste Stellung, eine zweite Stellung und/oder eine dritte Stellung verstellt werden.

In der ersten Stellung wird das Arbeitsfluid nur zu dem Expansionsmaschinen-Bypass 20 geleitet. Die Expansionsmaschine 18 wird nicht durchströmt. So lässt sich bspw. der erste Energierückgewinnungsmodus und der Kühlmodus realisieren.

In der zweiten Stellung wird das Arbeitsfluid nur zu der Expansionsmaschine 18 geleitet. Der Expansionsmaschinen-Bypass 20 wird nicht durchströmt. So lässt sich bspw. der zweite Energierückgewinnungsmodus realisieren.

In der dritten Stellung wird das Arbeitsfluid mit einem flüssigen Anteil zu dem Expansionsmaschinen-Bypass 20 und mit einem dampfförmigen Anteil zu der Expansionsmaschine 18 geleitet. So lässt sich bspw. der dritte Energierückgewinnungsmodus realisieren.

Zum Verstellen der Ventileinrichtung 30 (bzw. zum Ansteuern eines Aktors zum Verstellen der Ventileinrichtung 30) kann eine Steuereinheit 36 vorgesehen sein.

Die Steuereinheit 36 kann die Ventileinrichtung 30 bspw. basierend auf einer Pumpendrehzahl der Pumpe 14, einem Temperatursignal eines Temperatursensors 38 und/oder eines Drucksignals eines Drucksensors 40 verstellen. Der Temperatursensor 38 und der Drucksensor 40 können stromabwärts des ersten Wärmeübertragers 16 und stromaufwärts der Expansionsmaschine 18 und/oder des zweiten Wärmeübertragers 22 angeordnet sein. Basierend auf den Signalen kann die Steuereinheit 36 eine Phase, einen Dampfgehalt und eine Dampfmenge des Arbeitsfluids stromabwärts des ersten Wärmeübertragers 16 ermitteln. Basierend darauf kann die Ventileinrichtung 30 in die jeweils zugehörige Stellung verstellt werden. Es können ein oder mehrere Grenzwerte für den Dampfgehalt und/oder die Dampfmenge vorgegeben sein, bei deren Unterschreiten oder Überschreiten eine zugehörige Verstellung der Ventileinrichtung 30 ausgelöst wird.

Alternativ oder zusätzlich kann die Steuereinheit 36 die Ventileinrichtung 30 bspw. in Abhängigkeit von einer Last des Antriebs 10 verstellen. Bei einer Teillast des Antriebs 10 kann die Ventileinrichtung zu der ersten Stellung (z. B. bei Schwachlast) oder der dritten Stellung (z. B. Mittellast) verstellt werden. Bei einer Volllast des Antriebs 10 kann die Ventileinrichtung 30 zu der zweiten oder dritten Stellung verstellt werden.

Es ist auch bspw. möglich, dass für den Kühlmodus und/oder zum Starten des Antriebs 10 und/oder zum Überlastschutz der Expansionsmaschine 18 ein optionaler weiterer Expansionsmaschinen-Bypass 42 angeordnet ist, der die Expansionsmaschine 18 (und den Expansionsmaschinen-Bypass 20) umgeht. Die Ventileinrichtung 30 kann ebenfalls eine Zuführung des Arbeitsfluids zu dem weiteren Expansionsmaschinen-Bypass 42 anpassen. Es ist möglich, dass die Drossel 28 im Expansionsmaschinen-Bypass 42 angeordnet sein kann, z. B. auch als ein Abschnitt der Ventileinrichtung 30.

Eine Anordnung mit zwei Expansionsmaschinen-Bypässen 20, 42 kann eine Variabilität des Fluidkreislaufes 12 zudem deutlich erhöhen. Wenn bspw. keine Energierückgewinnung mittels der Expansionsmaschine 18 und mittels des zweiten Wärmeübertragers 22 gewünscht ist, kann nur der weitere Expansionsmaschinen-Bypass 42 durchströmt werden. Es ist auch möglich, dass nur ein Anteil des Arbeitsfluids durch den weiteren Expansionsmaschinen-Bypass 42 strömt und der übrige Anteil durch die Expansionsmaschine 18 und/oder den Expansionsmaschine-Bypass 20 strömt.

### Bezugszeichenliste

- 10: Antrieb
- 12: Fluidkreislauf
- 14: Pumpe
- 16: Erster Wärmeübertrager
- 18: Expansionsmaschine
- 20: Expansionsmaschinen-Bypass
- 22: Zweiter Wärmeübertrager
- 24: Dritter Wärmeübertrager
- 26: System
- 28: Drossel
- 30: Ventileinrichtung
- 32: Flüssig-Dampf-Separator
- 34: Flüssigkeitsseparator
- 36: Steuereinheit
- 38: Temperatursensor
- 40: Drucksensor
- 42: Weiterer Expansionsmaschinen-Bypass

## Patentansprüche

1. Vorrichtung zur Energierückgewinnung für ein Kraftfahrzeug, aufweisend:
einen Antrieb (10), vorzugsweise einen Brennstoffzellen-Antrieb;
einen Fluidkreislauf (12) zur Abwärmenutzung des Antriebs (10), wobei in dem Fluidkreislauf (12) ein Arbeitsfluid zirkuliert und der Fluidkreislauf (12) aufweist:
- einen ersten Wärmeübertrager (16), der thermisch mit dem Antrieb (10) zur Übertragung von Abwärme von dem Antrieb (10) auf das Arbeitsfluid gekoppelt ist;
- eine Expansionsmaschine (18), die stromabwärts des ersten Wärmeübertragers (16) angeordnet ist;
- einen Expansionsmaschinen-Bypass (20), der die Expansionsmaschine (18) umgeht und in dem ein zweiter Wärmeübertrager (22) angeordnet ist; und
- eine Ventileinrichtung (30), die zum Anpassen eines Fluidstroms des Arbeitsfluids durch die Expansionsmaschine (18) und den Expansionsmaschinen-Bypass (20) angeordnet ist;
eine Steuereinheit (36), die dazu ausgebildet ist, die Ventileinrichtung (30) zu verstellen;
**dadurch gekennzeichnet, dass** die Steuereinheit (36) dazu ausgebildet ist, die Ventileinrichtung (30) in Abhängigkeit von einer Phase, einem Dampfgehalt und/oder einer Dampfmenge des Arbeitsfluids zu verstellen.

2. Vorrichtung nach Anspruch 1, wobei:
der zweite Wärmeübertrager (22) thermisch mit einem System (26) zur Übertragung von Wärme von dem Arbeitsfluid auf das System (26) gekoppelt ist.

3. Vorrichtung nach Anspruch 2, wobei:
das System (26) eine Heizung, eine Klimaanlage, eine Batterietemperierung, eine Wärmepumpe, einen Wärmespeicher und/oder eine Abwärmenutzungseinrichtung aufweist.

4. Vorrichtung nach einem der vorherigen Ansprüche, wobei der Fluidkreislauf (12) in Abhängigkeit von der Abwärme des Antriebs (10) betreibbar ist:
in einem Energierückgewinnungsmodus mit einer Phasenumwandlung des Arbeitsfluids im ersten Wärmeübertrager (16), wobei das Arbeitsfluid nach der Phasenumwandlung im Wesentlichen nur zu der Expansionsmaschine (18) zugeführt wird; und/oder
in einem Energierückgewinnungsmodus mit einer Erwärmung ohne eine Phasenumwandlung des Arbeitsfluids im ersten Wärmeübertrager (16), wobei das Arbeitsfluid nach der Erwärmung ohne die Phasenumwandlung im Wesentlichen nur dem zweiten Wärmeübertrager (22) im Expansionsmaschinen-Bypass (20) zugeführt wird.

5. Vorrichtung nach einem der vorherigen Ansprüche, wobei der Fluidkreislauf (12) in Abhängigkeit von der Abwärme des Antriebs (10) betreibbar ist:
in einem Energierückgewinnungsmodus mit einer teilweisen Phasenumwandlung des Arbeitsfluids im ersten Wärmeübertrager (16),
wobei das Arbeitsfluid nach der teilweisen Phasenumwandlung teilweise der Expansionsmaschine (18) und teilweise dem zweiten Wärmeübertrager (22) im Expansionsmaschinen-Bypass (20) zugeführt wird; oder
das Arbeitsfluid nach der teilweisen Phasenumwandlung im Wesentlichen nur der Expansionsmaschine (18) zugeführt wird.

6. Vorrichtung nach einem der vorherigen Ansprüche, wobei:
die Ventileinrichtung (30) in eine erste Stellung verstellbar ist, in der der Fluidstrom im Wesentlichen nur durch den Expansionsmaschinen-Bypass (20) geführt ist; und/oder
die Ventileinrichtung (30) in eine zweite Stellung verstellbar ist, in der der Fluidstrom im Wesentlichen nur durch die Expansionsmaschine (18) geführt ist; und/oder
die Ventileinrichtung (30) in eine dritte Stellung verstellbar ist, in der der Fluidstrom durch die Expansionsmaschine (18) und den Expansionsmaschinen-Bypass (20) geführt ist.

7. Vorrichtung nach Anspruch 6, wobei:
die Ventileinrichtung (30) stufenlos oder schrittweise verstellbar ist.

8. Vorrichtung nach einem der vorherigen Ansprüche, wobei:
die Steuereinheit (36) dazu ausgebildet ist, die Ventileinrichtung (30) aus der ersten Stellung in die zweiten Stellung oder die dritte Stellung zu verstellen, wenn der Dampfgehalt und/oder die Dampfmenge des Arbeitsfluids einen vorbestimmen Grenzwert überschreitet; und/oder
die Steuereinheit (36) dazu ausgebildet ist, die Ventileinrichtung (30) aus der dritten Stellung in die zweite Stellung zu verstellen, wenn ein Dampfgehalt und/oder eine Dampfmenge des Arbeitsfluids einen vorbestimmten Grenzwert überschreitet; und/oder
die Steuereinheit (36) dazu ausgebildet ist, die Ventileinrichtung (30) aus der zweiten Stellung in die erste Stellung oder die dritte Stellung zu verstellen, wenn der Dampfgehalt und/oder die Dampfmenge des Arbeitsfluids einen vorbestimmen Grenzwert unterschreitet; und/oder
die Steuereinheit (36) dazu ausgebildet ist, die Ventileinrichtung (30) aus der dritten Stellung in die erste Stellung zu verstellen, wenn ein Dampfgehalt und/oder eine Dampfmenge des Arbeitsfluids einen vorbestimmten Grenzwert unterschreitet.

9. Vorrichtung nach einem der vorherigen Ansprüche, wobei:
die Steuereinheit (36) dazu ausgebildet ist, eine Phase, einen Dampfgehalt und/oder eine Dampfmenge des Arbeitsfluids basierend auf einem Signal von einem Temperatursensor (38), der stromabwärts des ersten Wärmeübertragers (16) angeordnet ist, einem Signal von einem Drucksensor (40), der stromabwärts des ersten Wärmeübertragers (16) angeordnet ist, und/oder einer Pumpendrehzahl einer Pumpe, die stromaufwärts des ersten Wärmeübertragers (16) angeordnet ist, zu ermitteln.

10. Vorrichtung nach einem der vorherigen Ansprüche, wobei:
die Steuereinheit (36) dazu ausgebildet ist, die Ventileinrichtung (30) in Abhängigkeit von einer Last des Antriebs (10) zu verstellen,
wobei vorzugsweise:
die Ventileinrichtung (30) bei einer Teillast des Antriebs (10) zu der ersten Stellung oder der dritten Stellung verstellt wird; und/oder
die Ventileinrichtung (30) bei einer Volllast des Antriebs (10) zu der zweiten Stellung oder der dritten Stellung verstellt wird.

11. Vorrichtung nach einem der vorherigen Ansprüche, wobei:
der Fluidkreislauf (12) ferner eine Drossel (28) aufweist, die in dem Expansionsmaschinen-Bypass (20) stromabwärts von dem zweiten Wärmeübertrager (22) angeordnet ist oder in einem weiteren Expansionsmaschinen-Bypass (42), der die Expansionsmaschine (18) umgeht, angeordnet ist; und/oder
der Fluidkreislauf (12) ferner einen weiteren Expansionsmaschinen-Bypass (42), der die Expansionsmaschine (18) umgeht, aufweist.

12. Vorrichtung nach einem der vorherigen Ansprüche, wobei:
der Fluidkreislauf (12) ferner einen Flüssig-Dampf-Separator (32) aufweist, der an einer Abzweigstelle des Expansionsmaschinen-Bypasses (20) stromaufwärts der Expansionsmaschine (18) angeordnet ist.

13. Kraftfahrzeug, vorzugsweise Nutzfahrzeug, mit einer Vorrichtung nach einem der vorherigen Ansprüche.

## Claims

1. Device for energy recovery for a motor vehicle, comprising:
a drive (10), preferably a fuel-cell drive;
a fluid circuit (12) for utilizing waste heat of the drive (10), wherein (12) a working fluid circulates in the fluid circuit (12) and the fluid circuit (12) comprises:
- a first heat exchanger (16), which is thermally coupled to the drive (10) for transferring waste heat from the drive (10) to the working fluid;
- an expansion machine (18), which is arranged downstream of the first heat exchanger (16);
- an expansion machine bypass (20), which bypasses the expansion machine (18) and in which a second heat exchanger (22) is arranged; and
- a valve device (30), which is arranged for adapting a fluid flow of the working fluid through the expansion machine (18) and the expansion machine bypass (20);
a control unit (36), which is configured to adjust the valve device (30);
**characterized in that** the control unit (36) is configured to adjust the valve device (30) in dependence on a phase, a vapor content, and/or an amount of vapor of the working fluid.

2. Device as claimed in claim 1, wherein:
the second heat exchanger (22) is thermally coupled to a system (26) for transferring heat from the working fluid to the system (26).

3. Device as claimed in claim 2, wherein:
the system (26) comprises a heater, an air-conditioning unit, a battery tempering unit, a heat pump, a heat reservoir, and/or a waste-heat recovery device.

4. Device as claimed in one of the preceding claims, wherein the fluid circuit (12) is operable in dependence on the waste heat of the drive (10):
in an energy recovery mode with a phase transition of the working fluid in the first heat exchanger (16), wherein the working fluid is only fed essentially to the expansion machine (18) after the phase transformation; and/or
in an energy recovery mode with heating, without a phase transition of the working fluid in the first heat exchanger (16), wherein the working fluid is only fed essentially to the second heat exchanger (22) in the expansion machine bypass (20) after the heating without the phase transition.

5. Device as claimed in one of the preceding claims, wherein the fluid circuit (12) is operable in dependence on the waste heat of the drive (10):
in an energy recovery mode with a partial phase transition of the working fluid in the first heat exchanger (16),
wherein the working fluid is fed partly to the expansion machine (18) and partly to the second heat exchanger (22) in the expansion machine bypass (20) after the partial phase transition; or
the working fluid is only fed essentially to the expansion machine (18) after the partial phase transformation.

6. Device as claimed in one of the preceding claims, wherein:
the valve device (30) is adjustable into a first position, in which the fluid flow is only passed essentially through the expansion machine bypass (20); and/or
the valve device (30) is adjustable into a second position, in which the fluid flow is only passed essentially through the expansion machine (18); and/or
the valve device (30) is adjustable into a third position, in which the fluid flow is passed through the expansion machine (18) and the expansion machine bypass (20).

7. Device as claimed in claim 6, wherein:
the valve device (30) is adjustable in a stepless or step-by-step manner.

8. Device as claimed in one of the preceding claims, wherein:
the control unit (36) is configured to adjust the valve device (30) from the first position into the second position or the third position if the vapor content and/or the amount of vapor of the working fluid overshoots a predetermined limit value; and/or
the control unit (36) is configured to adjust the valve device (30) from the third position into the second position if a vapor content and/or an amount of vapor of the working fluid overshoots a predetermined limit value; and/or
the control unit (36) is configured to adjust the valve device (30) from the second position into the first position or the third position if the vapor content and/or the amount of vapor of the working fluid undershoots a predetermined limit value; and/or
the control unit (36) is configured to adjust the valve device (30) from the third position into the first position if a vapor content and/or an amount of vapor of the working fluid undershoots a predetermined limit value.

9. Device as claimed in one of the preceding claims, wherein
the control unit (36) is configured to determine a phase, a vapor content, and/or an amount of vapor of the working fluid on the basis of a signal from a temperature sensor (38), which is arranged downstream of the first heat exchanger (16), a signal from a pressure sensor (40), which is arranged downstream of the first heat exchanger (16), and/or a pump speed of a pump, which is arranged upstream of the first heat exchanger (16).

10. Device as claimed in one of the preceding claims, wherein:
the control unit (36) is configured to adjust the valve device (30) in dependence on a load of the drive (10),
wherein preferably:
the valve device (30) is adjusted to the first position or the third position in the case of a part load of the drive (10); and/or
the valve device (30) is adjusted to the second position or the third position in the case of a full load of the drive (10)

11. Device as claimed in one of the preceding claims, wherein:
the fluid circuit (12) further comprises a throttle (28), which is arranged in the expansion machine bypass (20) downstream of the second heat exchanger (22) or in a further expansion machine bypass (42), which bypasses the expansion machine (18); and/or
the fluid circuit (12) further comprises a further expansion machine bypass (42), which bypasses the expansion machine (18).

12. Device as claimed in one of the preceding claims, wherein:
the fluid circuit (12) further comprises a liquid-vapor separator (32), which is arranged at a branching point of the expansion machine bypass (20) upstream of the expansion machine (18).

13. Motor vehicle, preferably a commercial vehicle, with a device as claimed in one of the preceding claims.

## Revendications

1. Dispositif de récupération d'énergie pour un véhicule automobile, présentant :
un entraînement (10), de préférence un entraînement par pile à combustible ;
un circuit de fluide (12) pour utiliser la chaleur perdue de l'entraînement (10), dans lequel un fluide de travail circule dans le circuit de fluide (12), et le circuit de fluide (12) présente :
- un premier échangeur thermique (16) qui est couplé thermiquement à l'entraînement (10) pour transférer la chaleur perdue de l'entraînement (10) au fluide de travail ;
- une machine à expansion (18) qui est disposée en aval du premier échangeur thermique (16) ;
- une dérivation de machine à expansion (20) qui contourne la machine à expansion (18) et dans laquelle est disposé un deuxième échangeur thermique (22) ; et
- un dispositif formant vanne (30) qui est disposé pour adapter un écoulement de fluide du fluide de travail à travers la machine à expansion (18) et la dérivation de machine à expansion (20) ;
une unité de commande (36) qui est réalisée pour déplacer le dispositif formant vanne (30) ;
**caractérisé en ce que** l'unité de commande (36) est réalisée pour déplacer le dispositif formant vanne (30) en fonction d'une phase, d'une teneur en vapeur et/ou d'une quantité de vapeur du fluide de travail.

2. Dispositif selon la revendication 1, dans lequel :
le deuxième échangeur thermique (22) est couplé thermiquement à un système (26) permettant de transférer la chaleur du fluide de travail au système (26) .

3. Dispositif selon la revendication 2, dans lequel :
le système (26) présente un chauffage, un climatiseur, un dispositif de régulation de température de batterie, une pompe à chaleur, un accumulateur de chaleur et/ou un dispositif d'utilisation de la chaleur perdue.

4. Dispositif selon l'une quelconque des revendications précédentes, dans lequel le circuit de fluide (12) peut en fonction de la chaleur perdue de l'entraînement (10) fonctionner :
dans un mode de récupération d'énergie avec un changement de phase du fluide de travail dans le premier échangeur thermique (16), dans lequel, après la changement de phase, le fluide de travail est amené substantiellement uniquement à la machine à expansion (18) ; et/ou
dans un mode de récupération d'énergie avec un échauffement sans changement de phase du fluide de travail dans le premier échangeur thermique (16), dans lequel, après l'échauffement sans changement de phase, le fluide de travail est amené substantiellement uniquement au deuxième échangeur thermique (22) dans la dérivation de machine à expansion (20).

5. Dispositif selon l'une quelconque des revendications précédentes, dans lequel le circuit de fluide (12) peut en fonction de la chaleur perdue de l'entraînement (10) fonctionner :
dans un mode de récupération d'énergie avec un changement de phase partiel du fluide de travail dans le premier échangeur thermique (16),
dans lequel, après le changement de phase partiel, le fluide de travail est amené en partie à la machine à expansion (18) et en partie au deuxième échangeur thermique (22) dans la dérivation de machine à expansion (20) ; ou
après le changement de phase partiel, le fluide de travail est amené substantiellement uniquement à la machine à expansion (18).

6. Dispositif selon l'une quelconque des revendications précédentes, dans lequel :
le dispositif formant vanne (30) peut être déplacé dans une première position dans laquelle l'écoulement de fluide n'est guidé substantiellement qu'à travers la dérivation de machine à expansion (20) ; et/ou
le dispositif formant vanne (30) peut être déplacé dans une deuxième position dans laquelle l'écoulement de fluide n'est guidé substantiellement qu'à travers la machine à expansion (18) ; et/ou
le dispositif formant vanne (30) peut être déplacé dans une troisième position dans laquelle l'écoulement de fluide est guidé à travers la machine à expansion (18) et la dérivation de machine à expansion (20).

7. Dispositif selon la revendication 6, dans lequel :
le dispositif formant vanne (30) peut être déplacé en continu ou progressivement.

8. Dispositif selon l'une quelconque des revendications précédentes, dans lequel :
l'unité de commande (36) est réalisée pour déplacer le dispositif formant vanne (30) de la première position à la deuxième position ou à la troisième position lorsque la teneur en vapeur et/ou la quantité de vapeur du fluide de travail dépasse(nt) une valeur limite prédéterminée ; et/ou
l'unité de commande (36) est réalisée pour déplacer le dispositif formant vanne (30) de la troisième position à la deuxième position lorsqu'une teneur en vapeur et/ou une quantité de vapeur du fluide de travail dépasse(nt) une valeur limite prédéterminée ; et/ou
l'unité de commande (36) est réalisée pour déplacer le dispositif formant vanne (30) de la deuxième position à la première position ou à la troisième position lorsque la teneur en vapeur et/ou la quantité de vapeur du fluide de travail soupasse(nt) une valeur limite prédéterminée ; et/ou
l'unité de commande (36) est réalisée pour déplacer le dispositif formant vanne (30) de la troisième position à la première position lorsqu'une teneur en vapeur et/ou une quantité de vapeur du fluide de travail soupasse(nt) une valeur limite prédéterminée.

9. Dispositif selon l'une quelconque des revendications précédentes, dans lequel :
l'unité de commande (36) est réalisée pour déterminer une phase, une teneur en vapeur et/ou une quantité de vapeur du fluide de travail sur la base d'un signal d'un capteur de température (38) qui est disposé en aval du premier échangeur thermique (16), d'un signal d'un capteur de pression (40) qui est disposé en aval du premier échangeur thermique (16), et/ou d'une vitesse de rotation de pompe d'une pompe qui est disposée en amont du premier échangeur thermique (16).

10. Dispositif selon l'une quelconque des revendications précédentes, dans lequel :
l'unité de commande (36) est réalisée pour déplacer le dispositif formant vanne (30) en fonction d'une charge de l'entraînement (10),
dans lequel de préférence :
à charge partielle de l'entraînement (10), le dispositif formant vanne (30) est déplacé à la première position ou à la troisième position ; et/ou
à charge totale de l'entraînement (10), le dispositif formant vanne (30) est déplacé à la deuxième position ou à la troisième position.

11. Dispositif selon l'une quelconque des revendications précédentes, dans lequel :
le circuit de fluide (12) présente en outre un étrangleur (28) qui est disposé dans la dérivation de machine à expansion (20) en aval du deuxième échangeur thermique (22) ou dans une autre dérivation de machine à expansion (42) qui contourne la machine à expansion (18) ; et/ou
le circuit de fluide (12) présente une autre dérivation de machine à expansion (42) qui contourne la machine à expansion (18).

12. Dispositif selon l'une quelconque des revendications précédentes, dans lequel :
le circuit de fluide (12) présente en outre un séparateur liquide/vapeur (32) qui est disposé à un embranchement de la dérivation de machine à expansion (20) en amont de la machine à expansion (18).

13. Véhicule automobile, de préférence véhicule utilitaire, comprenant un dispositif selon l'une quelconque des revendications précédentes.
